# EUROPEAN PATENT APPLICATION

(11) **EP 2 851 357 A1**
(43) Date of publication of application: **25.03.2015**
(21) Application number: 13790804.2
(22) Date of filing: 13.05.2013
(51) Int. Cl.: C04B 37/00, C04B 35/52, C04B 41/87

(54) **METHOD FOR PRODUCING (CARBON MATERIAL)-(CERAMIC MATERIAL) JOINT, AND (CARBON MATERIAL)-(CERAMIC MATERIAL) JOINT**

(30) Priority: 15.05.2012 JP 2012111810; 04.09.2012 JP 2012194137
(71) Applicant: Toyo Tanso Co., Ltd., Osaka-shi Osaka 555-0011 (JP)
(72) Inventor: OHKUNI, Tomoyuki, Osaka-shi Osaka 555-0011 (JP); CHEN, Weiwu, Suita-shi Osaka 565-0871 (JP); MIYAMOTO, Yoshinari, Osaka-shi Osaka 555-0011 (JP)
(74) Representative: Merkle, Gebhard
(86) International application number: PCT/JP2013/063253
(87) International publication number: WO 2013/172286

(57) **Abstract**

Provided is a novel method for producing a carbon material-to-ceramic material joint. A method for producing a carbon material-to-ceramic material joint (2) in which a carbon material (10) and a ceramic material (12) are joined together. A layer (11) containing a ceramic and a sintering aid is formed on the carbon material (10) and sintered to obtain the carbon material-to-ceramic material joint (2).

## Description

### Technical Field

This invention relates to a method for producing a carbon material-to-ceramic material joint and a carbon material-to-ceramic material joint.

### Background Art

Carbon materials have no melting points under ordinary pressure. On the other hand, ceramics are generally high-melting-point materials. Therefore, it can be said that it is difficult to join a carbon material and a ceramic by fusion welding.

In addition, carbon materials and ceramics are generally brittle materials. Therefore, it is difficult to join a carbon material and a ceramic material by pressure welding. The joining of a carbon material and a ceramic material is generally implemented by a mechanical method using screws or the like or a method using a brazing filler metal, an adhesive or the like.

For example, Patent Literature 1 discloses a method for bonding graphite materials using a phenol-formaldehyde resin. Patent Literature 2 discloses bonding graphite materials using a carbon-based adhesive, such as phenol resin. Patent Literature 3 discloses a method for joining graphite and an aluminum-based material using a brazing filler metal.

### Citation List

### Patent Literature

Patent Literature 1: JP-A-H06-345553
Patent Literature 2: JP-A-2002-321987
Patent Literature 3: JP-A-H04-26567

### Summary of Invention

### Technical Problem

However, for example, in the method in which an adhesive of an organic material is used, it is difficult to produce a carbon material-to-ceramic material joint for use in applications where it may be heated to high temperatures. On the other hand, in the method in which the adhesive as described above is carbonized, there is concern that the carbonized adhesive may deteriorate thermal conductivity. Also in the method in which a brazing filler metal is used, because the resultant carbon material-to-ceramic material joint cannot be used at temperatures higher than the melting point of the brazing filler metal, it is difficult to produce a carbon material-to-ceramic material joint for use in applications where it may be heated to high temperatures. Under these circumstances, there is a need for a further powerful method for joining a carbon material and an inorganic material.

A principal object of the present invention is to provide a novel method for producing a carbon material-to-ceramic material joint.

### Solution to Problem

The present invention is directed to a method for producing a carbon material-to-ceramic material joint in which a carbon material and a ceramic material are joined together. In the present invention, a layer containing a ceramic and a sintering aid is formed on the carbon material and sintered to obtain the carbon material-to-ceramic material joint.

In the method for producing a carbon material-to-ceramic material joint of the present invention, at least one selected from the group consisting of yttrium oxide, aluminum oxide, calcium oxide, lithium oxide, silicon oxide, boron oxide, zirconium oxide, magnesium oxide, cerium oxide, gadolinium oxide, europium oxide, lanthanum oxide, lutetium oxide, neodymium oxide, erbium oxide, dysprosium oxide, and samarium oxide is preferably used as the sintering aid.

In the method for producing a carbon material-to-ceramic material joint of the present invention, it is preferred that the sintering aid be penetrated into recesses or pores in a surface layer of the carbon material by the sintering and allowed to reside in the surface layer of the carbon material by cooling.

In the method for producing a carbon material-to-ceramic material joint of the present invention, it is preferred that silicon elements be contained in the ceramic and/or the sintering aid and a crystalline phase or an amorphous glass phase be formed at the interface between the carbon material and the ceramic material by the sintering.

In the method for producing a carbon material-to-ceramic material joint of the present invention, a content of the sintering aid in the layer containing the ceramic and the sintering aid is preferably 2% by mass or more.

In the method for producing a carbon material-to-ceramic material joint of the present invention, at least one of a metal nitride and a metal carbide is preferably used as the ceramic.

In the method for producing a carbon material-to-ceramic material joint of the present invention, at least one selected from the group consisting of aluminum nitride, boron nitride, silicon nitride, silicon carbide, boron carbide, tantalum carbide, zirconium carbide, tungsten carbide, titanium carbide, chromium carbide, and niobium carbide is preferably used as the ceramic.

In the method for producing a carbon material-to-ceramic material joint of the present invention, at least one selected from the group consisting of an electrode material for steel making, an isotropic graphite material, a porous carbon material, a carbon fiber aggregate, a carbon fiber composite, and a carbon fiber-reinforced carbon composite is preferably used as the carbon material.

A first carbon material-to-ceramic material joint of the present invention includes a carbon material and a ceramic material. The ceramic material is joined to the carbon material. A sintering aid used in sintering the ceramic material is contained in both of a surface layer of the carbon material adjoining the ceramic material and a surface layer of the ceramic material adjoining the carbon material.

In the first carbon material-to-ceramic material joint of the present invention, a content of the sintering aid in the surface layer of the carbon material adjoining the ceramic material may be higher than a content of the sintering aid in the surface layer of the ceramic material adjoining the carbon material.

A second carbon material-to-ceramic material joint of the present invention includes a carbon material and a ceramic material joined to the carbon material. A crystalline phase or an amorphous glass phase formed by sintering is provided at the joint interface between the carbon material and the ceramic material.

### Advantageous Effects of Invention

The present invention can provide a novel method for producing a carbon material-to-ceramic material joint.

### Brief Description of Drawings

[Fig. 1] Fig. 1 is a schematic cross-sectional view for illustrating a method for producing a carbon material-to-ceramic material joint according to one embodiment of the present invention.
[Fig. 2] Fig. 2 is a schematic cross-sectional view of a carbon material-to-ceramic material joint according to one embodiment of the present invention.
[Fig. 3] Fig. 3 is a SEM image of an interface region between a carbon material and a ceramic material in a carbon material-to-ceramic material joint A obtained in Example 1.
[Fig. 4] Fig. 4 is a SEM image of the interface region between the carbon material and the inorganic material in the carbon material-to-ceramic material joint A obtained in Example 1, showing the distribution of Al elements.
[Fig. 5] Fig. 5 is a SEM image of the interface region between the carbon material and the inorganic material in the carbon material-to-ceramic material joint A obtained in Example 1, showing the distribution of C elements.
[Fig. 6] Fig. 6 is a SEM image of the interface region between the carbon material and the inorganic material in the carbon material-to-ceramic material joint A obtained in Example 1, showing the distribution of Y elements.
[Fig. 7] Fig. 7 is a SEM image of an interface region between a carbon material and an inorganic material in a carbon material-to-ceramic material joint B obtained in Example 2.
[Fig. 8] Fig. 8 is a SEM image of the interface region between the carbon material and the inorganic material in the carbon material-to-ceramic material joint B obtained in Example 2, showing the distribution of Al elements.
[Fig. 9] Fig. 9 is a SEM image of the interface region between the carbon material and the inorganic material in the carbon material-to-ceramic material joint B obtained in Example 2, showing the distribution of C elements.
[Fig. 10] Fig. 10 is a SEM image of the interface region between the carbon material and the inorganic material in the carbon material-to-ceramic material joint B obtained in Example 2, showing the distribution of Y elements.
[Fig. 11] Fig. 11 is a SEM image of an interface region between a carbon material and a ceramic material in a carbon material-to-ceramic material joint E obtained in Example 5.
[Fig. 12] Fig. 12 is a SEM image of an interface region between a carbon material and a ceramic material in a carbon material-to-ceramic material joint H obtained in Comparative Example 2.
[Fig. 13] Fig. 13 is a graph showing peak intensities in X-ray diffraction patterns of interface regions of carbon material-to-ceramic material joints D to F obtained in Examples 4 to 6.
[Fig. 14] Fig. 14 is a SEM image of the interface region between a carbon material and an inorganic material in the carbon material-to-ceramic material joint D obtained in Example 4, showing the distribution of Si elements.
[Fig. 15] Fig. 15 is a SEM image of the interface region between the carbon material and the inorganic material in the carbon material-to-ceramic material joint D obtained in Example 4, showing the distribution of Al elements.
[Fig. 16] Fig. 16 is a SEM image of the interface region between the carbon material and the inorganic material in the carbon material-to-ceramic material joint D obtained in Example 4, showing the distribution of Y elements.
[Fig. 17] Fig. 17 is a SEM image of the interface region between a carbon material and an inorganic material in the carbon material-to-ceramic material joint F obtained in Example 6, showing the distribution of Si elements.
[Fig. 18] Fig. 18 is a SEM image of the interface region between the carbon material and the inorganic material in the carbon material-to-ceramic material joint F obtained in Example 6, showing the distribution of Al elements.
[Fig. 19] Fig. 19 is a SEM image of the interface region between the carbon material and the inorganic material in the carbon material-to-ceramic material joint F obtained in Example 6, showing the distribution of Y elements.

### Description of Embodiments

A description will be given below of an example of a preferred embodiment for working of the present invention. However, the following embodiment is simply illustrative. The present invention is not at all limited by the following embodiment.

The drawings to which the embodiment and the like refer are schematically illustrated, and the dimensional ratios and the like of objects illustrated in the drawings may be different from those of the actual objects. The dimensional ratios and the like of specific objects should be determined in consideration of the following descriptions.

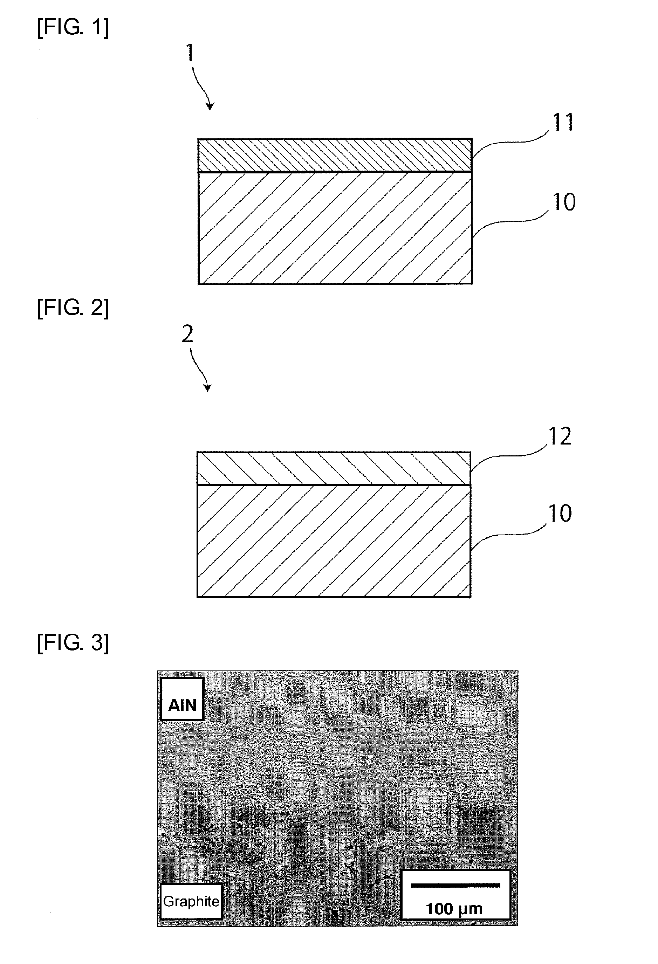

Fig. 1 is a schematic cross-sectional view for illustrating a method for producing a carbon material-to-ceramic material joint according to this embodiment. Fig. 2 is a schematic cross-sectional view of a carbon material-to-ceramic material joint according to this embodiment. With reference to Figs. 1 and 2, a description will be given of a production method and structure of a carbon material-to-ceramic material joint 2 of this embodiment.

### (Method for Producing Carbon Material-to-Ceramic Material Joint 2)

In a method for producing the carbon material-to-ceramic material joint 2, a carbon material 10 shown in Fig. 1 is first prepared.

No particular limitation is placed on the type of the carbon material 10 so long as it consists mainly of carbon. Preferably used as the carbon material 10 is at least one selected from the group consisting of an electrode material for steel making, an isotropic graphite material, a porous carbon material, a carbon fiber aggregate, a carbon fiber composite, and a carbon fiber-reinforced carbon composite. No particular limitation is placed on the form of the carbon material 10. The carbon material may be carbonaceous or graphitic.

Next, a ceramic layer 11 which is a layer containing a ceramic and a sintering aid is formed on the carbon material, resulting in a carbon material-to-ceramic laminate 1. The ceramic layer 11 is made of a mixture of the ceramic and the sintering aid. For example, the ceramic layer 11 may be a mixture of ceramic particles and sintering aid particles or may be a plate-shaped ceramic in which the sintering aid is dispersed. The ceramic layer 11 may contain components other than the ceramic and the sintering aid.

No particular limitation is placed on the type of the ceramic. Preferably used as the ceramic is at least one of a metal nitride and a metal carbide. More preferably used as the ceramic is at least one selected from the group consisting of aluminum nitride, boron nitride, silicon nitride, silicon carbide, boron carbide, tantalum carbide, zirconium carbide, tungsten carbide, titanium carbide, chromium carbide, and niobium carbide.

Next, the carbon material-to-ceramic laminate 1 is heated to sinter the ceramic layer 11. Thus, a carbon material-to-ceramic material joint 2 is obtained in which the carbon material 10 and a ceramic material 12 both shown in Fig. 2 are joined together.

No particular limitation is placed on the method for sintering the ceramic layer 11. Examples of the method for sintering include, for example, spark plasma sintering, hot pressing, and pressureless sintering. The temperature during the sintering is preferably 1600°C or above and more preferably 1800°C or above. The temperature during the sintering is normally not higher than 2100°C. The pressure during the sintering is preferably 1 MPa or more and more preferably 10 MPa or more. The pressure during the sintering is normally not higher than 40 MPa.

During the sintering of the ceramic layer 11, at least one of the sintering aid and a component derived from the sintering aid (hereinafter, often referred to as the "sintering aid or the like") at least partly moves from the ceramic layer 11 to the carbon material 10. This can be attributed to the fact that the sintering aid or the like becomes liquefied under high temperatures during sintering to penetrate recesses or pores in the surface layer of the carbon material 10 and then becomes solidified by cooling to reside in the carbon material 10. In other words, in this embodiment, the sintering aid is penetrated into recesses or pores in the surface layer of the carbon material 10 by sintering and then allowed to reside in the surface layer of the carbon material 10 by cooling.

For example, general sintering aids for use in sintering ceramics can be used as the sintering aid. In order to further consolidate the junction between the carbon material 10 and the ceramic material 12 in the carbon material-to-ceramic material joint 2, it is preferred that at least one selected from the group consisting of yttrium oxide, aluminum oxide, calcium oxide, lithium oxide, silicon oxide, boron oxide, zirconium oxide, magnesium oxide, cerium oxide, gadolinium oxide, europium oxide, lanthanum oxide, lutetium oxide, neodymium oxide, erbium oxide, dysprosium oxide, and samarium oxide be used as the sintering aid.

In order to further consolidate the junction between the carbon material 10 and the ceramic material 12, the content of the sintering aid in the ceramic layer 11 is preferably 2% by mass or more and more preferably about 3% by mass. The content of the sintering aid in the ceramic layer 11 is preferably not more than 15% by mass and more preferably not more than 10% by mass.

In the above manner, the carbon material-to-ceramic material joint 2 can be produced.

### (Carbon Material-to-Ceramic Material Joint 2)

As shown in Fig. 2, the carbon material-to-ceramic material joint 2 includes the carbon material 10 and the ceramic material 12. The ceramic material 12 is joined to the carbon material 10.

The sintering aid used in sintering the ceramic material 12 is contained in both of the surface layer of the carbon material 10 adjoining the ceramic material 12 and the surface layer of the ceramic material 12 adjoining the carbon material 10. The content of the sintering aid in the surface layer of the carbon material 10 adjoining the ceramic material 12 may be higher than the content of the sintering aid in the surface layer of the ceramic material 12 adjoining the carbon material 10. The reason for this can be that the sintering aid or the like liquefied under high temperatures during sintering is likely to penetrate recesses or pores in the surface layer of the carbon material 10 and the sintering aid or the like is highly likely to reside in the carbon material 10.

In the carbon material-to-ceramic material joint 2, the carbon material 10 and the ceramic material 12 are strongly joined. The details of the reason for this are not necessarily clear but, for example, can be assumed as follows. As described previously, the sintering aid or the like contained in the ceramic layer 11 becomes liquefied during sintering of the ceramic layer 11 to penetrate recesses or pores in the surface layer of the carbon material 10 and then becomes solidified by subsequent cooling. In this course, the sintering aid or the like becomes solidified in an interface region between the carbon material 10 and the ceramic material 12 and thus the carbon material 10 and the ceramic material 12 are strongly joined through the sintering aid or the like.

Furthermore, there is not necessarily a need to use a brazing filler metal, an adhesive or the like for the carbon material-to-ceramic material joint 2. Therefore, the carbon material-to-ceramic material joint 2 can be used even under high temperatures, for example, at 1000°C or above.

Moreover, since there is not necessarily a need to use a brazing filler metal, an adhesive or the like, no thermally resistant layer is formed in the carbon material-to-ceramic material joint 2. Therefore, the carbon material-to-ceramic material joint 2 has a good thermal conductivity.

Hereinafter, the present invention will be described in more detail with reference to specific examples. The present invention is not at all limited by the following examples. Modifications and variations may be appropriately made therein without changing the gist of the present invention.

### (Example 1)

Isotropic graphite with a bulk density of 1.8 Mg/m³, a bending strength of 40 MPa, and a coefficient of linear thermal expansion of 4.7 × 10⁻⁶/K was used as a carbon material. Aluminum nitride (AlN) powder was used as an inorganic material. Yttrium oxide (Y₂O₃) was used as a sintering aid. The inorganic material and the sintering aid were mixed to give a mass ratio of 95:5 and the mixture was placed over the carbon material to produce a laminate. The obtained laminate was heated at approximately 1900°C under a pressure of approximately 30 MPa by spark plasma sintering to produce a carbon material-to-ceramic material joint A.

Next, for the purpose of measuring the joint strength of the carbon material-to-ceramic material joint, a tensile test was conducted. A three-layer structure was produced in which the inorganic material was joined to each of the top and bottom of the aforementioned carbon material in the same manner as above. Respective stainless jigs were bonded to the upper and lower inorganic materials by an epoxy adhesive. In this case, the bonding condition was retention at 80°C for 24 hours or more. The joint strength between the graphite material and the inorganic material was measured by pulling the stainless jigs fixed to the test piece at a rate of 0.5 min/mm with a strength tester. As a result, the joint strength was 13 MPa. In the carbon material-to-ceramic material joint A, the carbon material and the inorganic material were strongly joined.

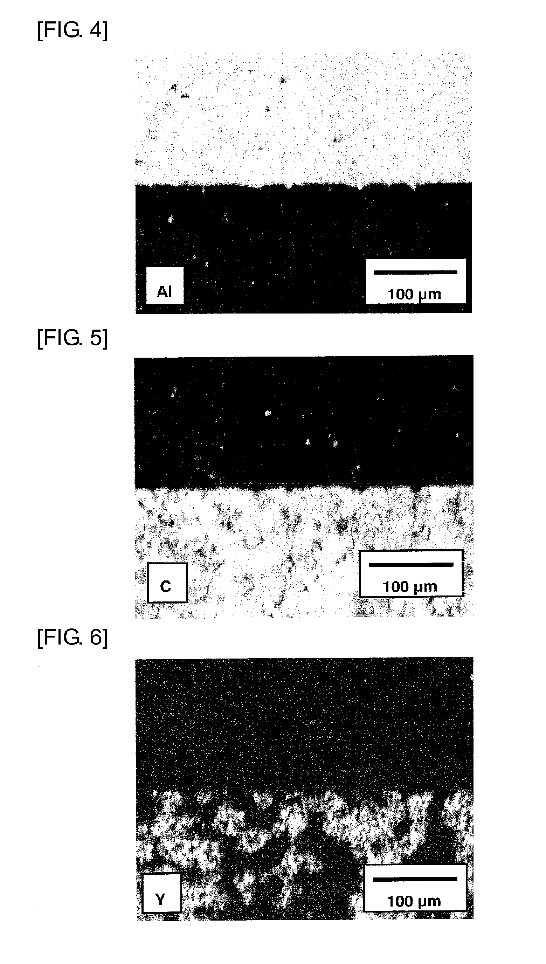

Fig. 3 shows a SEM image of an interface region between the carbon material and the inorganic material in the carbon material-to-ceramic material joint A. Furthermore, the distributions of Al, C, and Y elements are shown in Figs. 4, 5, and 6, respectively. As is obvious from Figs. 3 to 6, it can be seen that a large amount of sintering aid exists in the carbon material.

### (Example 2)

A carbon material-to-ceramic material joint B was produced in the same manner as in Example 1 except that a sintered aluminum nitride (AlN) plate containing yttrium oxide (Y₂O₃) was used as a mixture of an inorganic material and a sintering aid.

When the joint strength of the carbon material-to-ceramic material joint B was measured in the same manner as in Example 1, it was 10 MPa. In the carbon material-to-ceramic material joint B, the carbon material and the inorganic material were strongly joined.

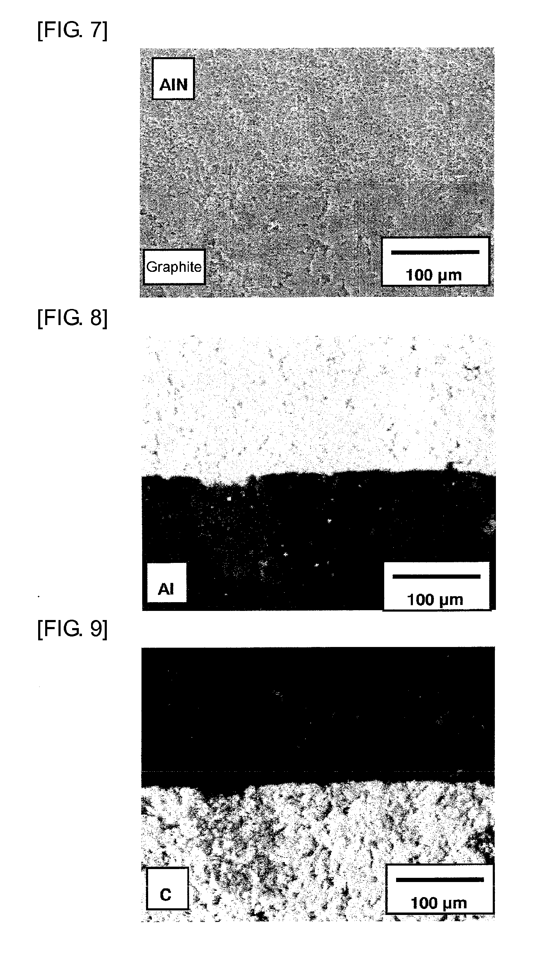

Fig. 7 shows a SEM image of an interface region between the carbon material and the inorganic material in the carbon material-to-ceramic material joint B. Furthermore, the distributions of Al, C, and Y elements are shown in Figs. 8, 9, and 10, respectively. As is obvious from Figs. 7 to 10, it can be seen that a large amount of sintering aid exists in the carbon material.

### (Example 3)

Aluminum nitride (AlN) powder (with an average particle size of 0.6 µm and a specific surface area of 2.7 m²/g) as an inorganic material and yttrium oxide (Y₂O₃) as a sintering aid were mixed to give a mass ratio ((inorganic material) : (sintering aid)) of 95:5. Next added to this mixture were 2-hethylhexyl phosphate as a dispersant, a mixture of 2-butanone and ethanol (in a volume ratio of 67:33) as a solvent, polyvinyl butyral as a binder, and a mixture of polyethylene glycol and benzyl butyl phthalate alcohol (in a mass ratio of 50:50) as a plasticizer, followed by mixing with a planetary centrifugal mixer to obtain a slurry. The obtained slurry was applied onto a PET film using a doctor blade and dried to obtain a 140-µm sheet. In the same manner as in Example 1 except that this sheet was disposed between the carbon material and sintered aluminum nitride (AlN) plate used in Example 2 to form a laminate, a carbon material-to-ceramic material joint C was produced by spark plasma sintering.

When the joint strength of the carbon material-to-ceramic material joint C was measured in the same manner as in Example 1, it was 14 MPa. In the carbon material-to-ceramic material joint C, the carbon material and the inorganic material were strongly joined.

It can be assumed that although in Examples 1 to 3 the sintering aid melted and leached out to the junction between the carbon material and the ceramic material during sintering or firing, the addition of Y₂O₃ or Al₂O₃ as a phase sintering aid and the sintering thereof caused the formation of a crystalline phase of Al₂Y₄O₉ at the joint interface. Furthermore, it can be assumed that in addition to the penetration of the sintering aid into the carbon material, the above crystalline phase filled in gaps at the interface between the carbon material and the ceramic material and, what is more, brought an anchoring effect of wedging into asperities on the surface of the carbon material, thus providing strong joint strength.

### (Example 4)

A carbon material-to-ceramic material joint D was produced in the same manner as in Example 1 except that silicon carbide (SiC) powder (with an average particle size of 0.8 µm and a specific surface area of 13 m²/g to 15 m²/g) as an inorganic material and yttrium oxide (Y₂O₃) and aluminum oxide (Al₂O₃) as sintering aids were used to mix them to give a weight ratio of SiC:Y₂O₃:Al₂O₃ = 91:3:6 and the temperature during spark plasma sintering was set at 1800°C.

When the joint strength of the carbon material-to-ceramic material joint D was measured in the same manner as in Example 1, it was 18 MPa. In the carbon material-to-ceramic material joint D, the carbon material and the inorganic material were strongly joined.

### (Example 5)

A carbon material-to-ceramic material joint E was produced in the same manner as in Example 4 except that the temperature during spark plasma sintering was set at 1900°C. When the joint strength of the carbon material-to-ceramic material joint E was measured in the same manner as in Example 1, it was 18 MPa. In the carbon material-to-ceramic material joint E, the carbon material and the inorganic material were strongly joined.

### (Example 6)

A carbon material-to-ceramic material joint F was produced in the same manner as in Example 4 except that the temperature during spark plasma sintering was set at 2000°C. When the joint strength of the carbon material-to-ceramic material joint F was measured in the same manner as in Example 1, it was 12 MPa. In the carbon material-to-ceramic material joint F, the carbon material and the inorganic material were strongly joined.

### (Example 7)

A carbon material-to-ceramic material joint I was produced in the same manner as in Example 1 except that the compounding ratio between aluminum nitride (AlN) and yttrium oxide (Y₂O₃) was 97.5:2.5 in mass ratio. When the joint strength of the carbon material-to-ceramic material joint I was measured in the same manner as in Example 1, it was 9 MPa. In the carbon material-to-ceramic material joint I, the carbon material and the inorganic material were strongly joined.

### (Example 8)

A carbon material-to-ceramic material joint J was produced in the same manner as in Example 1 except that the compounding ratio between aluminum nitride (AlN) and yttrium oxide (Y₂O₃) was 90:10 in mass ratio. When the joint strength of the carbon material-to-ceramic material joint J was measured in the same manner as in Example 1, it was 19 MPa. In the carbon material-to-ceramic material joint J, the carbon material and the inorganic material were strongly joined.

### (Comparative Example 1)

A carbon material-to-ceramic material joint G was produced by joining a laminate by spark plasma sintering in the same manner as in Example 1 except that no sintering aid was used.

When the joint strength of the carbon material-to-ceramic material joint G was measured in the same manner as in Example 1, it was 5 MPa. In the carbon material-to-ceramic material joint G, the joint strength between the carbon material and the inorganic material was small.

### (Comparative Example 2)

A carbon material-to-ceramic material joint H was produced by joining a laminate by spark plasma sintering in the same manner as in Example 5 except that no sintering aid was used.

When the joint strength of the carbon material-to-ceramic material joint H was measured in the same manner as in Example 1, it was 5 MPa. In the carbon material-to-ceramic material joint H, the joint strength between the carbon material and the inorganic material was small.

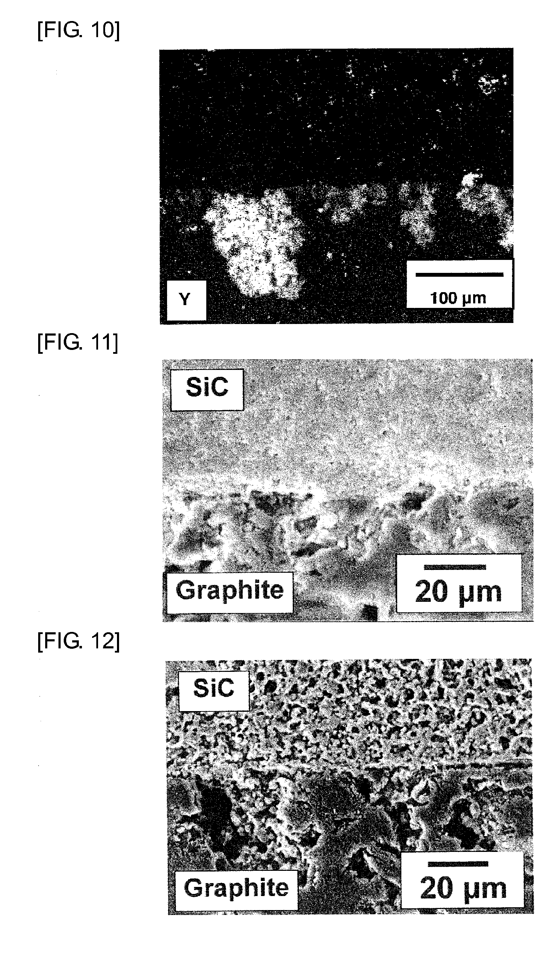

Figs. 11 and 12 are respective SEM images of the carbon material/ceramic material interface regions in Example 5 and Comparative Example 2. Fig. 11 shows that the junction between the carbon material and the ceramic material exhibits no gap and therefore provides a strong joint. On the other hand, Fig. 12 shows that the junction between the carbon material and the ceramic material has gaps and therefore provides an insufficient joint.

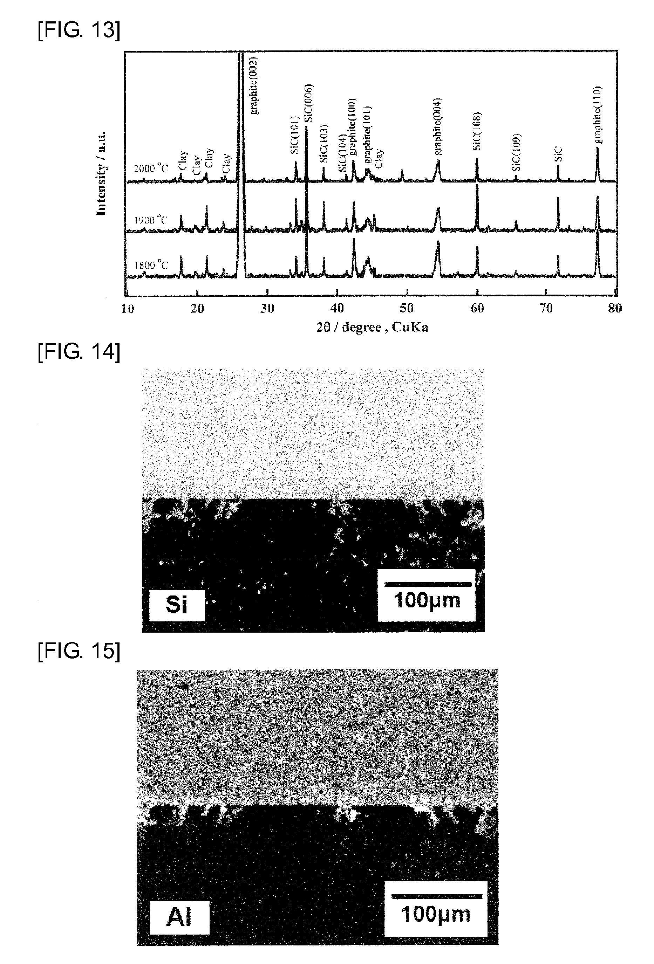

Fig. 13 is a graph showing peak intensities in x-ray diffraction patterns of the carbon material/ceramic material interface regions in Examples 4 to 6. Although the sintering aid melted and leached out to the junction between the carbon material and the ceramic material during sintering or firing, Fig. 13 shows neither Al₂O₃ peaks to be detected near 35° and 43° nor Y₂O³ peaks to be detected near 29° and 49°. Furthermore, although it is known that in the case of adding Y₂O₃ and Al₂O₃ as phase sintering aids to SiC and sintering them a Si-Al-Y-O-based phase is generally formed, Fig. 13 does not show any crystalline phase other than those of graphite and SiC (where the peaks of Clay are attributed to the use thereof for fixing the samples). Therefore, it can be assumed that a Si-Al-Y-O amorphous glass phase was formed in the interface region and the amorphous glass phase filled in gaps at the interface between the carbon material and the ceramic material and brought an anchoring effect of wedging into asperities on the surface of the carbon material, thus providing strong joint strength.

Figs. 14 to 16 show SEM images of the interface region between the carbon material and the inorganic material in the carbon material-to-ceramic material joint D obtained in Example 4, showing the respective distributions of Si elements, Al elements, and Y elements. It can be assumed that because in Example 4 the interface region is seen to be strongly joined but the penetration of the sintering aids into the carbon material is less seen, the formation of the above amorphous glass phase contributed to the joining.

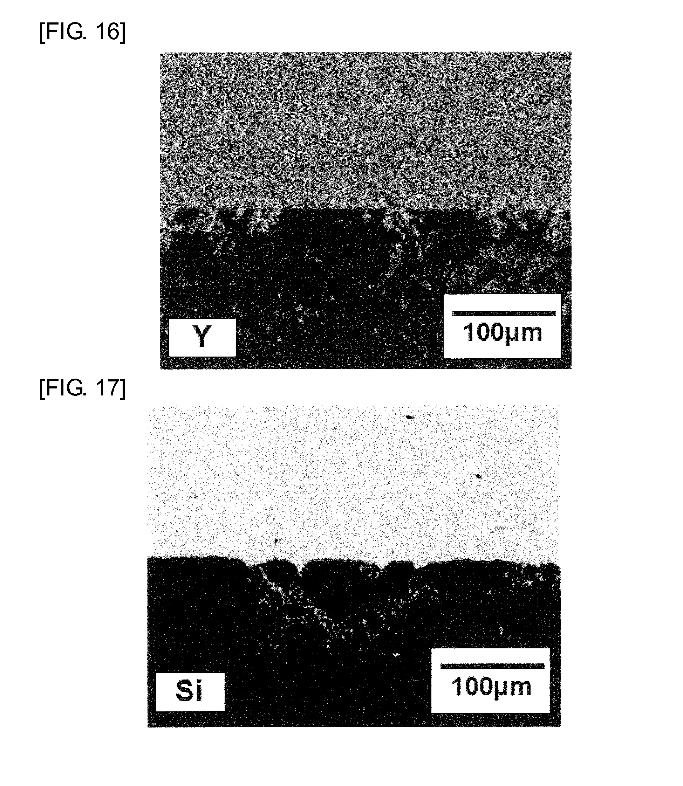

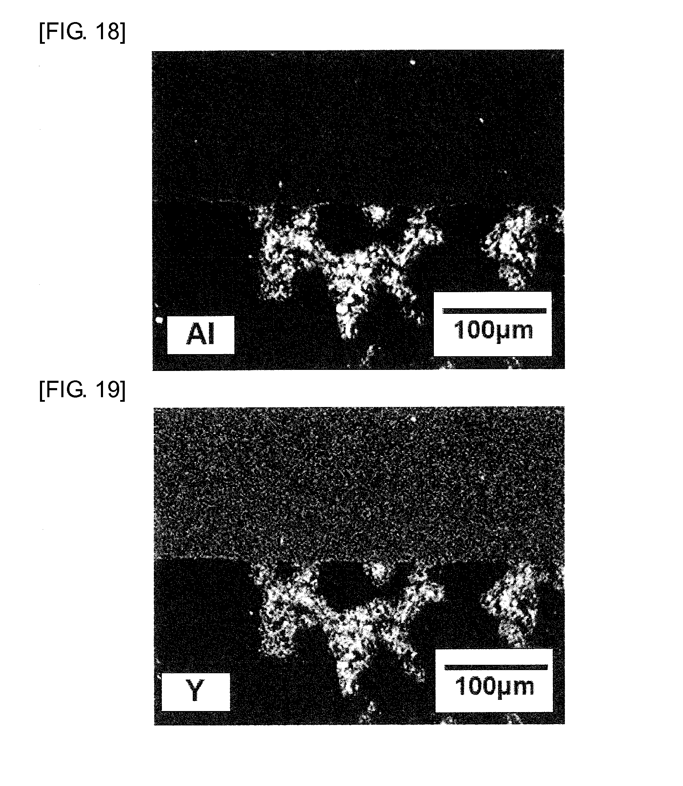

Figs. 17 to 19 show SEM images of the interface region between the carbon material and the inorganic material in the carbon material-to-ceramic material joint F obtained in Example 6, showing the respective distributions of Si elements, Al elements, and Y elements. In Example 6, the interface region is seen to be strongly joined and it is obvious that the sintering aids penetrated the carbon material and a large amount of sintering aids exist in the carbon material.

### Reference Signs List

- 1: Carbon material-to-ceramic laminate
- 2: carbon material-to-ceramic material joint
- 10: carbon material
- 11: ceramic layer
- 12: ceramic material

## Claims

1. A method for producing a carbon material-to-ceramic material joint in which a carbon material and a ceramic material are joined together, wherein a layer containing a ceramic and a sintering aid is formed on the carbon material and sintered to obtain the carbon material-to-ceramic material joint.

2. The method for producing a carbon material-to-ceramic material joint according to claim 1, wherein at least one selected from the group consisting of yttrium oxide, aluminum oxide, calcium oxide, lithium oxide, silicon oxide, boron oxide, zirconium oxide, magnesium oxide, cerium oxide, gadolinium oxide, europium oxide, lanthanum oxide, lutetium oxide, neodymium oxide, erbium oxide, dysprosium oxide, and samarium oxide is used as the sintering aid.

3. The method for producing a carbon material-to-ceramic material joint according to claim 1 or 2, wherein the sintering aid is penetrated into recesses or pores in a surface layer of the carbon material by the sintering and allowed to reside in the surface layer of the carbon material by cooling.

4. The method for producing a carbon material-to-ceramic material joint according to any one of claims 1 to 3, wherein silicon elements are contained in the ceramic and/or the sintering aid and a crystalline phase or an amorphous glass phase is formed at the interface between the carbon material and the ceramic material by the sintering.

5. The method for producing a carbon material-to-ceramic material joint according to any one of claims 1 to 4, wherein a content of the sintering aid in the layer containing the ceramic and the sintering aid is 2% by mass or more.

6. The method for producing a carbon material-to-ceramic material joint according to any one of claims 1 to 5, wherein at least one of a metal nitride and a metal carbide is used as the ceramic.

7. The method for producing a carbon material-to-ceramic material joint according to any one of claims 1 to 6, wherein at least one selected from the group consisting of aluminum nitride, boron nitride, silicon nitride, silicon carbide, boron carbide, tantalum carbide, zirconium carbide, tungsten carbide, titanium carbide, chromium carbide, and niobium carbide is used as the ceramic.

8. The method for producing a carbon material-to-ceramic material joint according to any one of claims 1 to 7, wherein at least one selected from the group consisting of an electrode material for steel making, an isotropic graphite material, a porous carbon material, a carbon fiber aggregate, a carbon fiber composite, and a carbon fiber-reinforced carbon composite is used as the carbon material.

9. A carbon material-to-ceramic material joint comprising:
a carbon material; and
a ceramic material joined to the carbon material,
wherein a sintering aid used in sintering the ceramic material is contained in both of a surface layer of the carbon material adjoining the ceramic material and a surface layer of the ceramic material adjoining the carbon material.

10. The method for producing a carbon material-to-ceramic material joint according to claim 9, wherein a content of the sintering aid in the surface layer of the carbon material adjoining the ceramic material is higher than a content of the sintering aid in the surface layer of the ceramic material adjoining the carbon material.

11. A carbon material-to-ceramic material joint comprising:
a carbon material; and
a ceramic material joined to the carbon material,
wherein a crystalline phase or an amorphous glass phase formed by sintering is provided at the joint interface between the carbon material and the ceramic material.
